# EUROPÄISCHE PATENTSCHRIFT

(11) **EP 1 981 108 B1**
(45) Veröffentlichungstag und Bekanntmachung des Hinweises auf die Patenterteilung: **23.11.2011**
(21) Anmeldenummer: 07033582.3
(22) Anmeldetag: 17.12.2007
(51) Int. Cl.: H01M 8/02

(54) **Interkonnektoranordnung und Verfahren zur Herstellung einer Kontaktanordnung für einen Brennstoffzellenstapel**
Interconnector assembly and method for manufacturing a connector assembly for a fuel cell stack
Agencement d'interconnecteur et procédé de fabrication d'un agencement de contact pour un empilement de piles à combustible

(30) Priorität: 02.04.2007 DE 102007015712; 10.04.2007 DE 102007016905
(43) Veröffentlichungstag der Anmeldung: 15.10.2008
(73) Patentinhaber: Staxera GmbH, 01237 Dresden (DE)
(72) Erfinder: Reinert, Andreas, 01277 Dresden (DE)
(74) Vertreter: Schumacher & Willsau

(56) Entgegenhaltungen:
- EP-A- 1 531 513
- WO-A-00/63992
- WO-A-2006/024246
- DE-A1-102006 045 086
- US-A1- 2004 101 733

## Beschreibung

Die Erfindung betrifft eine Interkonnektoranordnung für einen Brennstoffzellenstapel, die mit zumindest einer Membran-Elektroden-Einheit des Brennstoffzellenstapels in elektrische Verbindung gebracht werden kann.

Darüber hinaus bezieht sich die Erfindung auf ein Verfahren zur Herstellung einer Kontaktanordnung für einen Brennstoffzellenstapel.

Üblicherweise werden mehrere einzelne Brennstoffzellen beziehungsweise Membran-Elektroden-Einheiten zur Erzielung einer größeren elektrischen Leistung, als eine einzelne Brennstoffzelle alleine zur Verfügung stellen kann, zu einem so genannten Brennstoffzellenstapel beziehungsweise Brennstoffzellenstack zusammengefasst. Dabei werden benachbarte Brennstoffzellen des Brennstoffzellenstapels jeweils durch verbindende Interkonnektoranordnungen sowohl elektrisch als auch mechanisch miteinander gekoppelt. Durch diese Kopplung der einzelnen Brennstoffzellen über die Interkonnektoranordnungen entstehen somit übereinander gestapelte, elektrisch in Serie geschaltete Brennstoffzellen, die zusammen den Brennstoffzellenstapel bilden. Herkömmlicherweise sind in den dem Stand der Technik angehörenden Interkonnektoranordnungen Gasverteilerstrukturen ausgebildet, über die Betriebsmittelgase zur jeweiligen Membran-Elektroden-Einheit geführt werden. Diese Gasverteilerstrukturen können beispielsweise teilweise durch ein Gehäuseteil der Interkonnektoranordnung ausgebildet werden. Zu diesem Zweck sind in dem Gehäuseteil der Interkonnektoranordnung üblicherweise kanalartig verlaufende Vertiefungen beziehungsweise Wölbungen vorgesehen, die einen Kanalwandabschnitt von Gaskanälen ausbilden. Der andere Kanalwandabschnitt wird dann im verbauten Zustand der Interkonnektoranordnung im Brennstoffzellenstapel beispielsweise teilweise durch eine Membran-Elektroden-Einheit, insbesondere durch eine Anode oder Kathode einer benachbarten Membran-Elektroden-Einheit gebildet, so dass ein aus beiden Kanalwandabschnitten gebildeter Gaskanal unterhalb und oberhalb des Gehäuseteils entsteht. Derartige Gasverteilerstrukturen des Brennstoffzellenstapels werden häufig auch als Manifolds bezeichnet. Über diese Manifolds wird bewirkt, dass die Betriebsmittelgase für jede Membran-Elektroden-Einheit in entsprechende Elektrodenräume verteilt werden.

Üblicherweise werden die Brennstoffzellenstapel vorwiegend aus ferritischen Materialien hergestellt. Diese ferritischen Materialien weisen bei hohen Temperaturen eine geringe mechanische Stabilität auf, die sich in Deformationen durch Fließen oder Kriechen äußern kann. Dies ist insbesondere dann der Fall, wenn ein Hohlraum durch eine aus dünnwandigem Blech geprägte Struktur gebildet wird, wie dies bei den vorgenannten Gasverteilerstrukturen mit den Gaskanälen der Fall ist. Zur Vermeidung solcher Deformationen werden häufig Spacer beziehungsweise Abstandshalter in den entsprechenden Hohlraum eingesetzt, die zwischen den Gehäuseteilen einer Interkonnektoranordnung und einer Membran-Elektroden-Einheit vorgesehen sind und damit zur Stabilisierung des Brennstoffzellenstapels beitragen. Bereits bekannte Ausführungen von Interkonnektoranordnungen sind beispielsweise mit Rahmen vorgesehen, die sich auch um den Brennstoffzellenstack herum in dessen Randbereich erstrecken, insbesondere durch ringförmige Gebilde im Bereich der Manifolds, die zumindest teilweise direkt aus dem Blech eines oder beider Gehäuseteile der Interkonnektoranordnung gewonnen werden. Bei verpanntem Brennstoffzellenstapel wird ein Kraftfluss dann vorwiegend durch diese Bereiche, das heißt beispielsweise durch das ringförmige Gebilde in dem Randbereich, geleitet. Eine derartige Kraftflussleitung beziehungsweise Kraftübertragung, die großteils durch den Rahmen im Randbereich und in geringerem Ausmaß durch den Zentrumsbereich der Manifolds des Brennstoffzellenstacks stattfindet, führt jedoch zu mehreren erheblichen Nachteilen. So verläuft der Kraftfluss beispielsweise durch Dichtmaterial, das in Fugen jeweils zwischen einzelnen Brennstoffzellen und Interkonnektoranordnungen angeordnet und meistens aus Glaskeramik ausgebildet ist. Glaskeramik neigt jedoch zum Kriechen oder Fließen, insbesondere bei höheren Temperaturen, die beim Betrieb des Brennstoffzellenstacks auftreten. Durch dieses Kriechverhalten wird bei entsprechender Beanspruchung der Dichtungen die Verspannung des Brennstoffzellenstapels mit der Zeit stark verringert. Die Verwendung der Abstandhalter führt zwar dazu, dass die einzelnen Interkonnektoranordnungen stabilisiert sind, jedoch wird die Stabilität des gesamten Brennstoffzellenstacks aufgrund des Kriechverhaltens der Dichtungen weiterhin stark verringert. Um das Kriechen der Dichtungen so weit wie möglich zu vermeiden, wird gemäß dem Stand der Technik die Verwendung von so genannten Hybriddichtungen vorgeschlagen, die aus einem mechanisch stabilen Keramik- oder Metallkörper und aus Glas bestehen. Weiterhin bestehen bei Temperaturen über 850°C, wie sie insbesondere im Zusammenhang mit dem Betrieb von SOFC-Brennstoffzellenstacks vorkommen, kaum Möglichkeiten zur Verwendung von elastischen Bauteilen. Dadurch stehen die Dichtungen am Randbereich des Brennstoffzellenstacks und die weiter innen liegende elektrische Kontaktierung des Brennstoffzellenstacks (Aktivfläche) über die Interkonnektoranordnung stets in Konkurrenz zu den am Rand befindlichen Dichtungen. Da es schwierig ist, einen Stoffschluss zwischen einer Kathode einer Membran-Elektroden-Einheit und einem Gehäuseteil, insbesondere einem Blechteil, der Interkonnektoranordnung herzustellen, besteht eine Abhängigkeit von dem in der Aktivfläche wirkenden Kraftfluss. Stützt man einen Brennstoffzellenstack im Randbereich und im Manifold durch den Einsatz massiver Materialien, wie beispielsweise durch Abstandshalter oder Spacer, kann ein Kriechen der Materialien im Aktivbereich des Brennstoffzellenstacks zum Verlust des elektrischen Kontakts zwischen den einzelnen Brennstoffzellen und damit zur Degradation des Gesamtsystems führen.

Das Dokument WO 00/63992 beschreibt das Verwenden eines Nickelschaums bei einer Interkonnektoranordnung, der zwischen Gehäuseteilen der Interkonnektoranordnung und einer Membran-Elektroden-Einheit vorgesehen ist. Im Nickelschaum sind schmale Kanäle beziehungsweise Vertiefungen vorgesehen, um Wasser durch den Schaum zu führen.

Das Dokument DE 10 20006 045086 A1 beschreibt eine Interkonnektoranordnung, bei der zur Herstellung eines elektrischen Kontakts ein Gitter aus einem Stahl in einer porösen Auflageschicht aufgenommen ist. Die poröse Auflageschicht durchdringt die Gitterschicht derart, dass die Oberfläche der Gitterschicht von der porösen Schicht abgedeckt ist, um eine glatte Außenoberfläche zu schaffen. Die glatte Außenoberfläche dient zur Ablagerung eines Elektrolyten.

Der Erfindung liegt daher die Aufgabe zugrunde, die gattungsgemäßen Interkonnektoranordnungen und Verfahren zur Herstellung von Komponenten von Interkonnektoranordnungen derart weiterzubilden, dass eine Kontaktierung einzelner Brennstoffzellen eines Brennstoffzellenstapels auch bei hohen Betriebstemperaturen sichergestellt werden kann.

Diese Aufgabe wird durch die Merkmale der unabhängigen Ansprüche 1, 2, 3 und 4 gelöst.

Weitere vorteilhafte Ausgestaltungen der Erfindung ergeben sich aus den abhängigen Ansprüchen.

Die erfindungsgemäße Interkonnektoranordnung weist die Merkmale des Anspruchs 1 auf. Die Interkonnektoranordnung umfasst einen Nickelschaum, der zwischen zumindest einem Gehäuseteil der Interkonnektoranordnung und der Membran-Elektroden-Einheit zur Herstellung einer elektrisch leitfähigen Verbindung angeordnet ist. Der Nickelschaum steht vorzugsweise mit einer Anode der Membran-Elektroden-Einheit in Berührung. Dadurch ergibt sich auf der der Anode zugewandten Seite der Interkonnektoranordnung eine homogene Nickeloberfläche, die ideal an das Nickel der Anode anbinden kann.

Ein massiver ferritischer Chromstahl oder ein massiver ferritischer Stahl, die auch für sonstige Komponenten des Brennstoffzellenstapels verwendet werden, ist in den Nickelschaum eingelagert. Durch Einsatz eines somit stabilisierten Nickelschaums kann der Kraftfluss durch den Aktivbereich des Brennstoffzellenstacks noch effektiver geleitet werden. Als Materialien für diese Einlagerung in den Nickelschaum kommen jegliche Materialien in Betracht, die im Zusammenhang mit der Stabilisierung des Brennstoffzellenstapels verwendet werden können, solange diese Materialien die erforderlichen elektrischen, thermischen, mechanischen und chemischen Eigenschaften aufweisen. Dabei sind insbesondere derartige Stoffe beziehungsweise Materialien bevorzugt, die auch für die herkömmlichen Komponenten des Brennstoffzellenstapels, insbesondere für die Interkonnektorkassetten, zum Einsatz kommen.

Der ferritische Chromstahl oder der ferritische Stahl ist in der Form zumindest eines Drahts in den Nickelschaum eingelagert ist. Dadurch wird ermöglicht, den durch Verspannung des Brenn-stoffzellenstack erzeugten Kraftfluss durch massive Materialien, wie die Membran-Elektroden-Einheit (MEA), den stark komprimierten Nickelschaum, den zumindest einen in den Nickelschaum eingelagerten Draht oder Blechstreifen, Kontaktstege etc. zu leiten. Der Kraftfluss wird somit in erhöhtem Ausmaß durch den Aktivbereich des Brennstoffzellenstacks geleitet. Die Stabilisierung des Nickelschaums wird vorzugsweise durch Einlage massiver Materialien, wie des ferritischen Chromstahl-Drahtes oder des ferritischen Chromstahl-Blechstreifens, erreicht, indem der Draht beispielsweise in den Nickelschaum eingewalzt wird.

Der Draht ist gewalzt und derart in dem Nickelschaum angeordnet, dass flachgewalzte Oberflächenabschnitte des Drahts jeweils mit dem Gehäuseteil und der Membran-Elektroden-Einheit in Berührung stehen. Somit liegt günstigerweise kein Linienkontakt zwischen dem Gehäuseteil der Interkonnektoranordnung und der Membran-Elektroden-Einheit vor, da der Draht zumindest an Abschnitten, die direkt im Kraftfluss liegen, flachgewalzt ist. Dadurch werden beispielsweise zwei plane, einander gegenüberliegende Kontaktflächen beziehungsweise Oberflächenabschnitte des Drahts für das Gehäuseteil der Interkonnektoranordnung und die Membran-Elektroden-Einheit geschaffen, durch die der Kraftfluss laufen kann.

Die erfindungsgemäße Wiederholeinheit nach Anspruch 2 weist die erfindungsgemäße Interkonnektoranordnung und eine Membran-Elektroden-Einheit auf, die mit der erfindungsgemäßen Interkonnektoranordnung in elektrisch leitfähiger Verbindung steht.

Der erfindungsgemäße Brennstoffzellenstapel nach Anspruch 3 weist mehrere der erfindungsgemäßen Wiederholeinheiten auf.

Bei dem erfindungsgemäßen Verfahren nach Anspruch 4 zur Herstellung einer Kontaktanordnung für einen Brennstoffzellenstapel mit einem stabilisierten Nickelschaum, der insbesondere zur Aufnahme zwischen einem Gehäuseteil der erfindungsgemäßen Interkonnektoranordnung und einer Membran-Elektroden-Einheit dient, wird zunächst ein Nickelschaumstrang hergestellt, wobei anschließend ein ferritischer Chromstahl oder ein ferritischer Stahl in der Form zumindest eines Drahts in den Nickelschaum eingewalzt wird. Dabei wird der Draht derart in dem Nickelschaum angeordnet, dass flachgewalzte Oberflächenabschnitte des Drahts jeweils mit dem Gehäuseteil und der Membran-Elektrodeneinheit in Berührung gebracht werden. Dadurch ergeben sich die in Zusammenhang mit der erfindungsgemäßen Interkonnektoranordnung erwähnten Vorteile in ähnlicher oder gleicher Weise, weshalb zur Vermeidung von Wiederholungen auf die im Zusammenhang mit der erfindungsgemäßen Interkonnektoranordnung beschriebenen Vorteile verwiesen wird.

Das erfindungsgemäße Verfahren kann in vorteilhafter Weise derart weitergebildet werden, dass der stabilisierte Nickelschaum mit dem darin eingelagerten zumindest einem Draht in Strangabschnitte geschnitten wird.

Eine bevorzugte Ausführungsform der Erfindung wird nachfolgend anhand der Figuren beispielhaft erläutert.

Es zeigen:
- Figur 1: eine Darstellung einer erfindungsgemäßen Inter- konnektoranordnung in einem Brennstoffzellensta- pel und
- Figur 2: eine Darstellung einer Herstellungsroute, die zur Durchführung des erfindungsgemäßen Verfahrens zur Herstellung eines stabilisierten Nickelschaums geeignet ist.

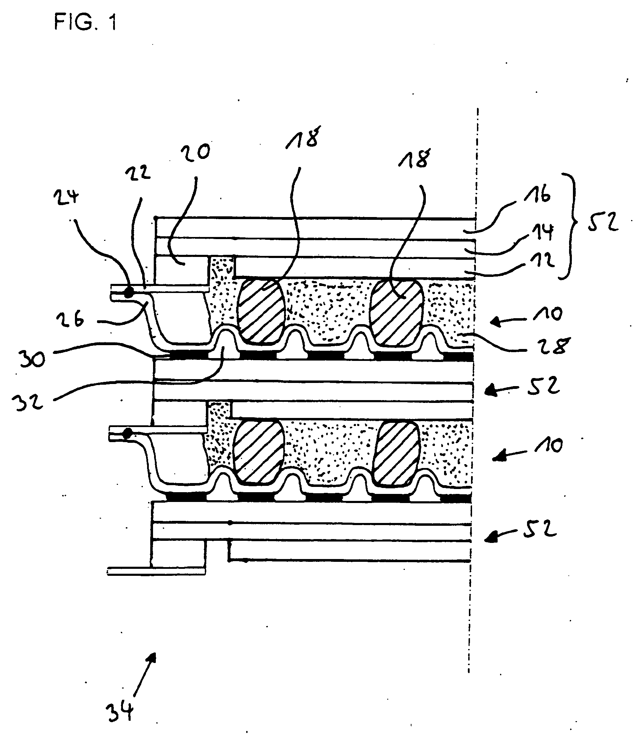

Figur 1 zeigt eine Darstellung einer erfindungsgemäßen Interkonnektoranordnung 10 in einem Brennstoffzellenstapel 34. Zur Vereinfachung der nachfolgenden Erläuterungen sind lediglich drei Membran-Elektroden-Einheiten 52 und zwei Interkonnektoranordnungen dargestellt. Jedoch kann der Brennstoffzellenstapel 34 beliebig viele Membran-Elektroden-Einheiten 52 mit diesen verbindenden Interkonnektoranordnungen 10 umfassen. Die erfindungsgemäße Interkonnektoranordnung 10 ist im dargestellten Fall zwischen zwei Membran-Elektroden-Einheiten 52 angeordnet, die zumindest jeweils eine Anode 12, einen Elektrolyten 14 sowie eine Kathode 16 umfassen. Dabei bildet jede Membran-Elektroden-Einheit 52 und eine mit der Anode 12 der Membran-Elektroden-Einheit 52 in Berührung stehende Interkonnektoranordnung 10 eine Wiederholeinheit des Brennstoffzellenstapels aus.

Die Interkonnektoranordnung 10 umfasst ein oberes Gehäuseteil 22 und ein unteres Gehäuseteil 26. Das obere Gehäuseteil 22 ist über eine Glaskeramikdichtung 20 mit dem Elektrolyten 14 einer über der Interkonnektoranordnung 10 angeordneten Membran-Elektroden-Einheit 52 gekoppelt. Hingegen ist das untere Gehäuseteil 26 über mehrere Kontaktstege 30 mit der Kathode 16 einer unter dieser Interkonnektoranordnung 10 angeordneten Membran-Elektroden-Einheit 52 gekoppelt. Dabei können beliebig viele Kontaktstege 30 vorliegen. Das untere Gehäuseteil 26, das obere Gehäuseteil 22 und die Anode 12 bilden einen Zwischenraum aus, indem ein Nickelschaum 28 mit darin eingelagerten Drähten 18 aufgenommen wird. Die Drähte 18 sind insbesondere ferritische Chromstahl-Drähte. Dabei wird jeder Draht 18 in einer Wölbung des unteren Gehäuseteils 26 aufgenommen und steht jeweils mit deren Wölbungsgrund in Berührung. Darüber hinaus steht der Draht 18 mit der Anode 12 der oberen Membran-Elektroden-Einheit 52 in Berührung. Entsprechend der Anzahl der Wölbungen in dem unteren Gehäuseteil 26 können beliebig viele Drähte 18 in den Wölbungen angeordnet sein. An einer Unterseite des unteren Gehäuseteils 26, das heißt zwischen dem unteren Gehäuseteil 26 und der unteren Membran-Elektroden-Einheit 52, werden anhand der in dem unteren Gehäuseteil 26 ausgebildeten Wölbungen, der Kontaktstege 30 und der unteren Membran-Elektroden-Einheit 52 jeweils Gaskanäle 32 ausgebildet. Vorzugsweise wird in diesem Fall ein sauerstoffreiches Gas oder reiner Sauerstoff durch die Gaskanäle 32 geleitet, wohingegen ein wasserstoffreiches Gas oder reiner Wasserstoff durch den Nickelschaum 28 geleitet wird. Jeder Draht 18 ist dabei derart gewalzt, dass lediglich flachgewalzte Oberflächenabschnitte des Drahts 18 mit der Anode 12 der oberen Membran-Elektroden-Einheit 52 und dem unteren Gehäuseteil 26, insbesondere mit dem Grund der Wölbungen des unteren Gehäuseteils 26, in Berührung stehen. In diesem Fall sind das obere Gehäuseteil 22 und das untere Gehäuseteil 26 miteinander über eine Schweißnaht 24 verbunden.

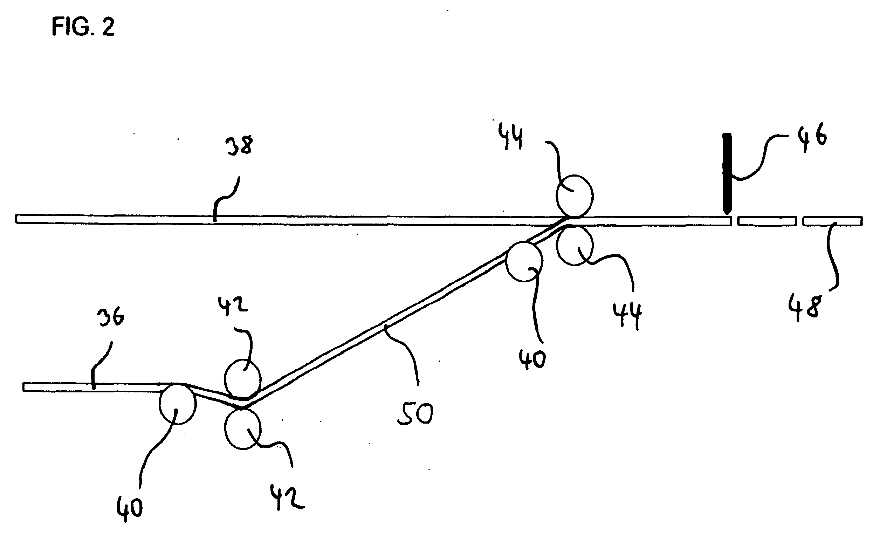

Figur 2 zeigt eine Darstellung einer Herstellungsroute, die zur Durchführung des erfindungsgemäßen Verfahrens zur Herstellung eines stabilisierten Nickelschaums geeignet ist. Zunächst werden ein oder mehrere Drahtstränge 36 parallel zueinander über eine mit Nuten versehene Führungsrolle 40 der Herstellungsroute geführt. Dabei kann anhand der Nuten in der Führungsrolle 40 der Abstand der parallel zueinander laufenden Drahtstränge 36 festgelegt werden. Nach Durchlaufen der Führungsrolle 40 werden die Drahtstränge 36 einer Walzung an deren Ober- und Unterseite mittels Drahtwalzen 42 der Herstellungsroute unterzogen. Dadurch entsteht ein gewalzter Drahtstrang 50 erhalten, der zumindest an dessen Ober- und Unterseite flachgewalzt ist. Anschließend gelangen die Drahtstränge 50 über eine weitere Führungsrolle 40 der Herstellungsroute zwischen zwei Nickelschaumwalzen 44 der Herstellungsroute. An dieser Stelle wird gleichzeitig ein Nickelschaumstrang 38 zwischen die Nickelschaumwalzen 44 geführt, der zumindest die Breite entsprechend der Anzahl der parallel zueinander angeordneten gewalzten Drahtstränge 50 aufweist. Nach Durchlaufen der Nickelschaumwalzen 44 sind die Drahtstränge 50 durch die Walzung über die Nickelschaumwalzen 44 in den Nickelschaumstrang 38 eingelagert, wodurch der stabilisierte Nickelschaumstrang ausgebildet wird. Anschließend wird der stabilisierte Nickelschaumstrang mit den darin eingelagerten und gewalzten Drahtsträngen 50 einem Schneideprozess anhand einer Schneideinrichtung 46 unterzogen, so dass einzelne, für die Interkonnektoranordnung 10 angepasste beziehungsweise ausgelegte stabilisierte Nickelschaumstrangabschnitte 48 gebildet werden.

### Bezugszeichenliste:

- 12: Anode der Membran-Elektroden-Einheit
- 14: Elektrolyt der Membran-Elektroden-Einheit
- 16: Kathode der Membran-Elektroden-Einheit
- 18: Draht
- 20: Glaskeramikdichtung
- 22: oberes Gehäuseteil
- 24: Schweißnaht
- 26: unteres Gehäusteil
- 28: Nickelschaum
- 30: Kontaktsteg
- 32: Gaskanal
- 34: Brennstoffzellenstapel
- 36: Drahtstrang
- 38: Nickelschaumstrang
- 40: Führungsrolle
- 42: Drahtwalzen
- 44: Nickelschaumwalzen
- 46: Schneideinrichtung
- 48: stabilisierter Nickelschaumstrangabschnitt
- 50: gewalzter Drahtstrang
- 52: Membran-Elektroden-Einheit

## Patentansprüche

1. Interkonnektoranordnung (10) für einen Brennstoffzellenstapel (34), die mit zumindest einer Membran-Elektroden-Einheit (52) des Brennstoffzellenstapels (34) in elektrische Verbindung bringbar ist und die einen Nickelschaum (28) umfasst, der zwischen zumindest einem Gehäuseteil (22, 26) der Interkonnektoranordnung (10) und der Membran-Elektroden-Einheit (52) zur Herstellung einer elektrisch leitfähigen Verbindung angeordnet ist, wobei ein massiver ferritischer Chromstahl (18) oder ein massiver ferritischer Stahl in den Nickelschaum (28) eingelagert ist, der in der Form zumindest eines Drahts (18) in den Nickelschaum (28) eingelagert ist, **dadurch gekennzeichnet, dass** der Draht (18) gewalzt und derart in dem Nickelschaum (28) angeordnet ist, dass flachgewalzte Oberflächenabschnitte des Drahts (18) jeweils mit dem Gehäuseteil (26) und der Membran-Elektroden-Einheit (52) in Berührung stehen.

2. Wederholeinheit mit einer Interkonnektoranordnung (10) nach Anspruch 1 und einer Membran-Elektroden-Einheit (52), die mit der Interkonnektoranordnung (10) in elektrisch leitfähiger Verbindung steht.

3. Brennstoffzellenstapel (34) mit mehreren Wiederholeinheiten nach Anspruch 2.

4. Verfahren zur Herstellung einer Interkonnektoranordnung für einen Brennstoffzellenstapel (34) mit einem stabilisierten Nickelschaum (28), der zur Aufnahme zwischen einem Gehäuseteil (26) der Interkonnektoranordnung (10) und einer Membran-Elektroden-Einheit (52) dient, wobei das Verfahren die folgenden Schritte umfasst:
- Herstellen eines Nickelschaumstrangs und
- Einwalzen eines ferritischen Chromstahls oder eines ferritischen Stahls in der Form zumindest eines Drahts (18) in den Nickelschaum (28) derart, dass der ferritische Chromstahl (18) oder der ferritische Stahl in den Nickelschaum (28) eingelagert ist und der Draht (18) so in dem Nickelschaum (28) angeordnet wird, dass flachgewalzte Oberflächenabschnitte des Drahts (18) jeweils mit dem Gehäuseteil (26) und der Membran-Elektroden-Einheit (52) in Berührung gebracht werden.

5. Verfahren nach Anspruch 4, **dadurch gekennzeichnet, dass** der stabilisierte Nickelschaum (28) mit dem darin eingelagerten zumindest einem Draht (18) in Strangabschnitte geschnitten wird.

## Claims

1. An interconnector arrangement (10) for a fuel cell stack (34), which can be brought into electrical connection with at least one membrane electrode assembly (52) of the fuel cell stack (34) and which comprises a nickel foam (28), which is interposed between at least one housing part (22, 26) of the interconnector arrangement (10) and the membrane electrode assembly (52) for establishing an electrically conducting connection, wherein a massive ferritic chrome steel (18) or a massive ferritic steel is embedded in the nickel foam (28) in form of at least one wire (18), **characterized in that** the wire (18) is rolled and arranged in the nickel foam (28) such that surface portions of the wire (18) which are rolled flat are each in contact with the housing part (26) and the membrane electrode assembly (52).

2. A repetition unit having an interconnector arrangement (10) according to claim 1 and a membrane electrode assembly (52) in electrically conducting connection with the interconnector arrangement (10).

3. A fuel cell stack (34) having a plurality of repetition units according to claim 2.

4. A method for manufacturing an interconnector arrangement for a fuel cell stack (34) comprising a stabilized nickel foam (28), which serves for reception between a housing part (26) of the interconnector arrangement (10) and a membrane electrode assembly (52), the method comprising the following steps:
- manufacturing a nickel foam string and
- rolling into the nickel foam (28) a ferritic chrome steel or a ferritic steel, in form of at least one wire (18) such that the ferritic chrome steel (18) or the ferritic steel is embedded in the nickel foam (28) and the wire (18) is arranged in the nickel foam (28) such that surface portions of the wire (18) which are rolled flat are each brought into contact with the housing part (26) and the membrane electrode assembly (52).

5. The method according to claim 4, **characterized by** cutting into string portions the stabilized nickel foam (28) having embedded therein the at least one wire (18).

## Revendications

1. Agencement interconnecteur (10) pour un bloc de pile à combustible (34) qui peux être mis en contact électrique avec au moins une unité membrane électrode (52) du bloc de pile à combustible (34) et qui comprend une mousse nickel (28) agencée entre au moins une partie de boîtier (22, 26) de l'agencement interconnecteur (10) et l'unité membrane électrode (52), afin d'établir une liaison conductrice électrique, un acier chromique ferritique massif (18) ou un acier ferritique massif étant encastré dans la mousse nickel (28) sous forme d'un fil (18), **caractérisé en ce que** le fil (18) est cylindré et agencé dans la mousse nickel (28) de sorte que des sections de surface du fil (18) qui sont aplaties par cylindrage sont chacune en contact avec la partie de boîtier (26) et l'unité membrane électrode (52).

2. Unité de répétition comportant un agencement interconnecteur (10) selon la revendication 1 et une unité membrane électrode (52) qui est en contact conducteur électrique avec l'agencement interconnecteur (10).

3. Bloc de pile à combustible (34) comportant plusieurs unités de répétition selon la revendication 2.

4. Procédé pour produire un agencement interconnecteur pour un bloc de pile à combustible (34) comportant une mousse nickel stabilisée (28) qui sert de réception entre une partie de boîtier (26) de l'agencement interconnecteur (10) et une unité membrane électrode (52), le procédé comportant les étapes suivantes:
- production d'une corde de mousse de nickel et
- encastrage d'un acier chromique ferritique ou d'un acier ferritique sous forme d'au moins un fil (18) dans la mousse nickel (28) en le cylindrant, de sorte que l'acier chromique ferritique (18) ou l'acier ferritique est encastré dans la mousse nickel (28) et le fil (18) est agencé dans la mousse nickel (28) de sorte que des sections de surface du fil (18) aplaties par cylindrage sont chacune mises en contact avec la partie de boîtier (26) et l'unité membrane électrode (52).

5. Procédé selon la revendication 4, **caractérisé en ce que** la mousse nickel stabilisée (28) comportant le au moins un fil (18), qui est encastré dans la mousse nickel, est coupée en tronçons de corde.
